Europäisches Patentamt

European Patent Office

Office européen des brevets

(11) Veröffentlichungsnummer: **0 168 620 B1**

# EUROPÄISCHE PATENTSCHRIFT

(45) Veröffentlichungstag der Patentschrift: **25.09.91**

(51) Int. Cl.5: **H01B 1/12**, B29C 47/52, B29C 47/38, B29B 7/46

(21) Anmeldenummer: **85107027.6**

(22) Anmeldetag: **07.06.85**

(54) **Verfahren zur Herstellung von verformbaren Polymerblends aus elektrisch leitfähigen organischen Polymeren sowie Verwendung der Polymerblends.**

(30) Priorität: **15.06.84 DE 3422316**

(43) Veröffentlichungstag der Anmeldung:
**22.01.86 Patentblatt 86/04**

(45) Bekanntmachung des Hinweises auf die
Patenterteilung:
**25.09.91 Patentblatt 91/39**

(84) Benannte Vertragsstaaten:
**AT BE CH DE FR GB IT LI NL SE**

(56) Entgegenhaltungen:
**EP-A- 0 144 600**
**FR-A- 1 441 796**
**FR-A- 1 596 547**

(73) Patentinhaber: **Zipperling Kessler & Co (GmbH & Co)**
**Kornkamp 50**
**W-2070 Ahrensburg(DE)**

(72) Erfinder: **Wessling, Bernhard, Dr.**
**Bachstrasse 112**
**W-2072 Bargteheide(DE)**
Erfinder: **Volk, Harald, Dr.**
**Jenbekerstrasse 51a**
**W-2072 Bargteheide(DE)**

(74) Vertreter: **UEXKÜLL & STOLBERG Patentanwälte**
**Beselerstrasse 4**
**W-2000 Hamburg 52(DE)**

## Beschreibung

### Stand der Technik

Die Erfindung betrifft ein Verfahren zur Herstellung von verformbaren Polymerblends aus unlöslichen, elektrisch leitfähigen polykonjugierten organischen Polymeren sowie einem Matrixpolymer.

Die Synthese sowie die chemischen, elektrischen und photoelektrischen Eigenschaften von nicht-polymeren und von polymeren organischen Halbleitern und Leitern sind intensiv untersucht worden. Der Stand des derzeitigen Wissens, aber auch die z.T. unterschiedlichen Auffassungen sind mehrfach referiert worden, vergl. G. Wegner, Angew. Chem. 93, 352 bis 371 (1981); M. Hanack, Naturwiss. 69, 266 bis 275 (1982); A. Heeger et al., Synthetic Metals, Band 6, 243 bis 263 (1983); K. Seeger, Angew. Makromol. Chem. 109/110, 227 bis 251 (1982).

Unter "leitfähigen Polymeren" werden polykonjugierte Systeme verstanden, wie sie in Polyacetylen (PAc), poly-1,3,5,...n-substituierten Polyacetylenen, Acetylencopolymeren, sowie 1,3-tetramethylen- überbrückten Polyenen, z.B. aus der Polymerisation von 1,6-Heptadiin resultierenden Polymeren und ähnlichen Derivaten von Polyacetylen vorliegen; ferner gehören hierzu die unterschiedlichen Modifikationen von Polyparaphenylenen (PPP), die unterschiedlichen Modifikationen von Polypyrrolen (PPy), die unterschiedlichen Modifikationen von Polyphthalocyaninen (PPhc) und andere polymere organische Leiter wie z.B. Polyaniline, Polyperinaphthaline usw. Diese können als solche oder als mit oxidierenden oder reduzierenden Stoffen komplexierte ("dotierte") Polymere vorliegen; die Komplexierung führt in der Regel zu einer Erhöhung der elektrischen Leitfähigkeit um mehrere 10-er Potenzen bis in den metallischen Bereich hinein.

Die leitfähigen Polymeren fallen z.T. als polykristalline Pulver, folienähnliche Agglomerate oder Brocken von Primärteilchen an. Da z.B. Polyacetylen weder löslich noch schmelzbar ist, war es ein wesentlicher Fortschritt, als Shirakawa durch Grenzflächenpolymerisation freitragende, allerdings sehr dünne Folien erzeugen konnte, deren Eigenschaften dünnen Polymerfolien angenähert sind. Die an diesen Folien durchgeführten Untersuchungen über die Morphologie von Polyacetylen führten zu einer Fibrillentheorie, gemäß der sich Polyacetylen zu langgestreckten Fasern zusammenlagert, durch die sich kristalline Bereiche in Faserrichtung ausbilden, in denen nach der Dotierung (Komplexierung) entlang der Faserachse der Strom fließen soll.

Es herrscht allgemein die Meinung vor, daß die Leitfähigkeit durch die hohe Kristallinität und durch die Anordnung der polykonjugierten Systeme (ggf. in komplexierter Form) hervorgerufen wird. Es ist jedoch noch nicht ausreichend geklärt, ob der Leitfähigkeitsmechanismus bei den Polyenen und Polyphenylenen sowie Polypyrrolen von Elektronentransporten entlang der Kette oder quer zur Kettenrichtung bestimmt wird, umso mehr als auch die Morphologie der leitfähigen Polymeren bislang noch nicht aufgeklärt war. Hierzu konnte jetzt vom Erfinder bewiesen werden, daß die Primärteilchen von Polyacetylen stets feinste kugelförmige Partikelchen sind, die z.T. zu fibrillenartigen Sekundärteilchen, z.T. aber auch zu ungerichteten folienähnlichen Filmen agglomerieren, vergl. B. Weßling, Makromol. Chem. 185 (1984), 1265 bis 1275. Der Inhalt dieser Arbeit wird zum Bestandteil der Offenbarung in vorliegender Anmeldung gemacht.

Aus der Literatur lassen sich hinsichtlich der physikalischen Eigenschaften und der Verarbeitbarkeit folgende gemeinsame Merkmale von leitfähigen Polymeren herausstellen:

- Hohe Kristallinität, z.B. polykristalline Pulver, in Einzelfällen lange nadelförmige Kristalle oder andere makroskopische Kristallformen, z.B. bei Polyphthalocyaninen. Bei Polyacetylen überschreitet die Größe der Kristallite offenbar 100 Å nicht (D. White et al., Polymer 24, 805 (1983).

- Polykonjugierte Polymere sind im Grundzustand Isolatoren, im Gegensatz zu polymerüberbrückten Charge-Transfer-Komplexen wie Polyphthalocyaninen (vergl. Hanack, a.a.0., 269/270).

- Optisches Aussehen in der Regel mattschwarz (glänzend nur dann, wenn die Synthese an glatten Oberflächen ausgeführt wurde, vergl. die Shirakawa-Methode zur Herstellung freitragender "Folien", bei der die dem Glas zugewandte Seite glänzend, die dem Glas abgewandte Seite matt ist). Polyphthalocyanine sind nicht glänzende, blau erscheinende Pulver.

- Sofern aufgrund der Synthesebedingungen makroskopisch größere Gebilde gewonnen werden können, sind diese spröde (Ausnahme: cis-Polyacetylen). Charge-Transfer-Komplexe sind wegen ihres kristallinen Aufbaus immer sehr spröde Substanzen, die sich mechanisch sehr schlecht verarbeiten lassen (Hanack, a.a.0., 269/270). Ähnliches gilt für alle unkomplexierten und erst recht für die komplexierten leitfähigen Polymeren.

- Die leitfähigen Polymeren sind in aller Regel unlöslich, unschmelzbar und nicht formbar sowie meistens gegenüber Sauerstoff, Feuchtigkeit und höheren Temperaturen instabil. Sofern sich z.B. bei polymeren Charge-Transfer-Komplexen (PPhc) Schmelzpunkte überhaupt beobachten lassen, liegen diese nahe dem Zersetzungspunkt, so daß ein zersetzungsfreies Schmelzen nicht oder nur unter äußersten Schwierigkeiten möglich ist. Sofern bei den verschiedenen leitfähigen Polymeren lösliche Derivate existieren, ist deren Leitfähigkeit um mehrere 10-er Potenzen schlechter als bei den unlöslichen Ausgangsstoffen. Eine thermoplastische Verformung von leitfähigen Polymeren ist bisher nicht gelungen. Polypyrrol und einige Vertreter der Polyphthalocyanine sind gegenüber oxidativen und thermischen Einflüssen vergleichsweise stabil, vergl. Hanack a.a.O.; K. Kanazawa et al., J. Chem. Soc., Chem. Comm. 1979, 854/855.

Die 1982 von Hanack getroffene Aussage, daß die meisten organischen Leiter und leitfähigen Polymeren primär unter dem Gesichtspunkt hoher Leitfähigkeit hergestellt wurden, daß aber ihre mechanischen Eigenschaften, ihre Stabilität und ihre Verarbeitbarkeit vernachlässigt wurden, gilt unverändert. Zu den für die Verarbeitbarkeit wichtigen physikalischen Eigenschaften der leitfähigen Polymeren läßt sich folgendes feststellen:

### 1. Unlöslichkeit

Bisher konnte für leitfähige Polymere weder in nativer noch in komplexierter Form ein Lösungsmittel gefunden werden. Die von T. Matsumoto et al., J. Polym. Sci. (A-2) 10, 23 (1972) beschriebenen Versuche mit Polyacetylen aus mittels $\gamma$-Strahlung induzierter Polymerisation betrafen offenbar überhaupt kein Polyacetylen in der hier zur Diskussion stehenden chemischen Einheitlichkeit, wie die IR-Spektren zeigen, sondern uneinheitliche Gemische verschiedenartig substituierter niedermolekularer Polyene. Die Auflösung von Polyacetylen in heißer Schwefelsäure (S. Miyata et al., Polym. J. 15, 557 bis 558 (1983)) führt zu oxidativ stark angegriffenen chemisch veränderten Produkten (A. Pron, Polymer 24, 1294ff. (1983)).

Auch für die anderen leitfähigen Polymeren wurden bisher keine Lösungsmittel beschrieben. Für Polyphthalocyanine ist versucht worden, durch Einführung von Ringsubstituenten, z.B. tert.-Butylgruppen, die Löslichkeit zu erhöhen; dabei nimmt jedoch die Leitfähigkeit um mehrere 10-er Potenzen ab. T. Inabe et al., J. Chem. Soc., Chem. Comm. 1983, 1984-85 beschreiben die Lösung von Polyphthalocyanin in Trifluormethansulfonsäure, ohne jedoch Auskünfte über die Eigenschaften des daraus zurückgewinnenden Rohstoffs zu geben.

Es sind ferner auch keine Lösungsmittel oder Verfahren bekannt, mit denen sich echte, absetzungsstabile Dispersionen herstellen lassen. In der EP-A-62 211 werden zwar Polyacetylen-Suspensionen beschrieben, doch handelt es sich dabei um aufgeschlämmte grobe Polyacetylen-Teilchen ohne Desagglomeration der Tertiär- oder Sekundärstruktur der Teilchen.

In der älteren, nicht vorveröffentlichten EP-A-144 600 werden Polymerblends aus beliebigen Matrixpolymeren und "löslichen", leitfähigen Polymeren beschrieben. Dabei soll es sich um lösliche Polytriaromatmethan-Charge-Transfer-Komplexverbindungen oder Acetylen-Copolymere handeln. Im letzteren Fall ist das eingesetzte Comonomer nicht angegeben.

### 2. Schmelzverhalten

Alle leitfähigen Polymeren sind sowohl in nativer als auch in komplexierter Form nicht schmelzbar. Die Differential-Thermoanalyse von Polyphthalocyaninen liefert zwar Hinweise auf ein Schmelzverhalten, doch ist dieses von sofortiger Zersetzung begleitet. Dynamoviskoelastische Untersuchungen an Polyacetylen (Shox-an Chen et al., Makromol. Chem. Rapid Comm. 4, 503- 506 (1983) zeigen, daß zwischen -100° und +350° C weder ein Glasübergangspunkt noch ein kristallines Schmelzen zu beobachten sind. Ab etwa 350° C beginnt die Zersetzung von Polyacetylen. Die einzige Phasenumwandlung in diesem Bereich findet oberhalb 150° C statt und wird der cis/trans-Isomerisierung zugeschrieben.

Zwar sind gelegentlich schmelzbare leitfähige Polymere beschrieben worden, deren Leitfähigkeit jedoch in keiner Weise befriedigt und um mehrere 10-er Potenzen tiefer liegt als bei den hier diskutierten Polymeren.

### 3. Stabilität

Es gibt zahlreiche Berichte, die sich mit der Instabilität leitfähiger Polymerer befassen. Polyacetylen ist besonders sauerstoffempfindlich und es wurde berichtet, daß selbst bei Lagerung unter inerter Atmosphäre und in der Kälte die ursprünglichen Eigenschaften von Polyacetylen verloren gehen. Beispielsweise ist es nach einiger Zeit nicht mehr verstreckbar. Komplexierte Polyacetylene verlieren selbst bei Lagerung unter inerter Atmosphäre nach kurzer Zeit ihre hervorragenden elektrischen Eigenschaften fast vollständig. Diese Erscheinungen werden auf einen oxidativen Abbau und auf Vernetzungsprozesse zurückgeführt, welche auch bei der cis/trans-Isomerisierung stattfinden sollen (vergl. u.a. M. Rubner et al., J. Polym. Sci., Polym. Symp. 70, 45-69 (1983). Die Instabilität von Polymeren aus 1,6-Heptadiin wird von H. Gibson, J. Am. Chem. Soc. 105, 4417 bis 4431 (1983) beschrieben. Dieses lagert sich beim Erhitzen unter Vakuum in nicht definierte, nicht mehr konjugierte Polymere um. Vergleichbare Vorgänge finden bei Polyacetylen statt.

4. Verformbarkeit

Es ist bisher nicht gelungen, Formteile aus leitfähigen Polymeren durch Urformverfahren (Kunststoff-Taschenbuch, Seiten 58ff) zu erzeugen. Dies hängt unmittelbar damit zusammen, daß die Polymeren unschmelzbar und unlöslich sind. Ferner gelang es bisher nicht, echte Dispersionen dieser Stoffe in organischen Lösungsmitteln oder in viskosen Polymeren zu erzeugen.

Eine Ausnahme scheint in gewisser Hinsicht das cis-Polyacetylen zu bilden, das in beschränktem Umfang unmittelbar nach der Herstellung "duktil" ist, wie M. Druy et al., J. Polym. Sci., Polym. Phys. Ed. 18, 429 bis 441 (1980) berichten. Danach ist die Duktilität und Verstreckbarkeit ausschließlich auf das cis-Isomere beschränkt, während das trans-Isomere selbst in Abwesenheit von Sauerstoff spröde ist. A. MacDiarmid u. A. Heeger, Proceedings of a Nato ASI on Molecular Metals, Les Arcs, 1979, Plenumvortrag, erwähnen, daß frische "Folien" sowohl von cis- wie auch von trans-Polyacetylen flexibel und leicht verstreckbar sind, wobei letzteres der partiellen Orientierung der Fasern zugeschrieben wird.Auch das cis-Isomere verliert kurz nach der Synthese die Duktilitätseigenschaften selbst in Abwesenheit von Sauerstoff, der auf die Versprödung außerodentlich beschleunigend wirkt. Dies hängt u.a. damit zusammen, daß Sauerstoff nicht nur einen oxidativen Abbau herbeiführt, sondern auch die cis/trans-Isomerisierung bewirkt (J. Chien et al., J. Polym. Sci.,Polym. Phys. Ed. 21, 767 bis 770 (1983)). Nach Druy, a.a.0., tritt bei der Verstreckung unerwarteterweise eine Volumenzunahme ein, welche mit den schwachen interfibrillären Anziehungskräften erklärt wird. Darüber hinaus wird aus den Spannungs-Dehnungskurven und dem Zeitverhalten geschlossen, daß auch in Abwesenheit von Sauerstoff Vernetzungsprozesse stattfinden, möglicherweise durch das Auftreten freier Radikale bei der cis/ trans-Isomerisierung.

Angesichts dieser Schwierigkeiten hilft man sich zur Formgebung mit Methoden, die nicht den Urform-Verfahren zuzurechnen sind. So beschreiben Shirakawa et al. in der EP-A-26235 die Verformung eines gelartigen Polyacetylens mit einem Lösungsmittelgehalt von 5 bis 95 Gew.%, welches bei Temperaturen zwischen Raumtemperatur und bis zu 100°C gepreßt wird, wobei Formteile entstehen, die anschließend getrocknet werden. In ähnlicher Weise gehen Kobayashi et al. (GB-A-20 72 197) vor, welche frischpolymerisiertes cis-Polyacetylen mit vergleichbar hohen Lösungsmittelgehalten verpressen und anschließend kalandrieren. Das Endprodukt enthält vor dem Trocknungsvorgang noch etwa 5% Lösungsmittel.

Eine Herstellung von Formteilen, die ebenfalls nicht als Urform- Verfahren anzusehen ist, beschreiben Chien et al., Makromol. Chem., Rapid Comm. 4, 5-10 (1983), welche makroskopische Polyacetylenbänder durch spezielle Polymerisationsmethoden erzeugt haben.

J. Hocker et al. (EP-OS 62211) haben die Herstellung von Formteilen aus Polyacetylen enthaltenden Fremdpolymeren beschrieben; dabei werden die Fremdpolymeren in einem Lösungsmittel gelöst, in dem sich makroskopisch große Polyacetylenteilchen ("Polyacetylenkletten") befinden. Die Formgebung geschieht durch Entfernung der Lösungsmittel. Gegebenenfalls wird zur Beschleunigung der Suspensionsbildung ein Ultraturrax®-Rührgerät eingesetzt, wobei die Faserstruktur der Teilchen erhalten bleiben soll. Die so erhaltenen Formteile weisen nur eine vergleichsweise geringe Leitfähigkeit auf. Auch die weitere EP-OS 84330 derselben Autoren befaßt sich mit Versuchen, Formteile aus Polyacetylen enthaltenden Kunststoffen zu erhalten, ohne eigentliche Urformverfahren anzuwenden. In den beschriebenen Beispielen wird versucht, Laminate mit einer (dotierten) Polyacetylenschicht zu erzeugen, indem Polyacetylen in Form einer Suspension in einem leicht verdampfbaren Lösungsmittel wie Methylenchlorid aufgesprüht wird. Die so erzielte Polyacetylenschicht auf einem Polymeren oder einem anorganischen Träger wird anschließend mit einer weiteren Schutzschicht überzogen.

Für Polypyrrol wird in der DE-A-32 27 914 ein Verfahren angegeben, bei dem Polypyrrol bei Temperaturen von 150 bis 300°C und Drucken von 50 bis 150 bar verpreßt wird. Gemäß den Ausführungsbeispielen ist dieses Verfahren zur Herstellung von Mehrschicht-Laminaten aus nicht leitfähigen Polymerfilmen und Polypyrrolfilmen (wie sie unmittelbar aus der elektrochemischen Polymerisation erhalten werden) geeignet. Vorzugsweise werden Polypyrrol und dessen verschiedene Copolymere in Form von Folien auf Polyester-, Polyethylen- bzw. Polyacrylnitrilfolien oder auf Polyurethan- bzw. Polystyrolschaum aufgepreßt. Eine Verformung des leitfähigen Polypyrrols selbst findet offenbar nicht statt, sondern das thermoplastische Fließvermögen der nicht leitenden Polymerfilme ermöglicht anscheinend deren Verwendung als Bindemittel. Homogene Formkörper aus einer kontinuierlichen Polypyrrolphase bzw. ausschließlich aus Polypyrrol bestehende Formkörper lassen sich auf diese Weise nicht herstellen. Ein weiterer Nachteil besteht darin, daß die Verfahrensdauer 2 bis 10 Minuten unter nicht inerten Bedingungen beträgt, wobei sich oberflächlich dünne, nicht leitende Schichten ausbilden und chemische Abbauvorgänge nicht auszuschließen sind.

### 5. Polymerblends mit leitfähigen Polymeren

Um die oben beschriebenen Schwierigkeiten zu umgehen, hat man vielfach versucht, leitfähige Polymere oder organische Leiter in eine polymere Matrix einzuarbeiten und dadurch eine Verformbarkeit zu erreichen. Im Rahmen der Arbeiten, die zur vorliegenden Erfindung geführt haben, wurde jedoch gefunden, daß die nachträgliche Einarbeitung von leitfähigen Polymeren mit großen Problemen verbunden ist, da keine homogene Verteilung erzielt wird. vielmehr liegen die leitfähigen Polymeren in Form makroskopischer Agglomerate (schwarze Stippen) in der Matrix vor und beeinträchtigen auf diese Weise deren mechanische Eigenschaften, ohne die elektrischen Eigenschaften im gewünschten Umfang positiv zu beeinflussen.

Dies ist im wesentlichen auf Schwierigkeiten bei der Dispergierung und eine mangelnde Verträglichkeit zwischen dem leitfähigen Polymeren und dem Matrixpolymer zurückzuführen. Indirekt wird dies bestätigt durch die die Tatsache, daß sich hierzu in der Fachliteratur keine Hinweise finden. Offenbar in der Absicht, die beschriebenen Probleme zu umgehen, hat man andererseits vielfach versucht, Polymerblends dadurch herzustellen, daß man die Polymerisation des leitfähigen Polymeren in der Matrix des Trägerpolymers oder die Polymerisation des Trägerpolymers in einer leitfähige Polymerteilchen enthaltenen Suspension ausführt. M. Galwin und G. Wnek, J. Polym. Sci., Polym. Chem. Ed. 21, 2727 bis 2737 (1983) polymerisierten Acetylen auf und in einem LDPE-Film, der mit Ziegler-Natta-Katalysatoren imprägniert war. Die mechanischen Eigenschaften waren interessant, der erhaltene Polymerblend kann mit Jod aus der Gasphase dotiert werden, wobei bei einem Polyacetylenanteil von mehr als etwa 10% Leitfähigkeiten von > als 5 Siemens/cm erreicht wurden. Über die Leitfähigkeit und die sonstigen Eigenschaften nach einer weiteren Verarbeitung der Filme über die thermcplastische Phase bzw. nach der Verarbeitung dieses Blends selbst wird nichts berichtet.

### Zusammenfassung und Aufgabenstellung

Es ist somit festzustellen, daß die leitfähigen Polymeren eine Reihe von einschränkenden Nachteilen (Unlöslichkeit, schlechte Dispergierbarkeit, fehlende Erweichungsbereiche bzw. Glasübergangspunkte, nicht vorhandene Schmelzpunkte sowie mangelnde Stabilität gegenüber Sauerstoff und Hitze sowie teilweise gegenüber Vernetzungsprozessen) zeigen, die ihre Einführung in die technische Verwertung bis heute verhindern. Nach dem derzeitigen Wissensstand beruhen diese Nachteile ebenso wie die elektrische Leitfähigkeit vor allem auf dem hohen Kristallinitätsgrad der leitfähigen Polymeren sowie der z.T. erheblichen Reaktivität vor allem gegenüber Sauerstoff.

Es wäre ein Fortschritt, wenn es gelänge, stabile Dispersionen von leitfähigen Polymeren in thermoplastischen Polymeren zu erhalten, da damit die Formbarkeit und die Erzielung bestimmter, die Leitfähigkeit optimierender morphologischer Polymerblendstrukturen ermöglicht würde. Die technische Verwertbarkeit von Polyacetylen und den meisten übrigen leitfähigen Polymeren wird besonders dadurch behindert, daß die elektrischen und vor allem auch die mechanischen Eigenschaften bereits nach kurzer Zeit und insbesondere nach einer Komplexierung sehr schnell abnehmen. Es wäre daher ein außerordentlicher Fortschritt, wenn es gelänge, leitfähige Polymere zu verformen und dabei sowohl während als auch nach der Verformung eine Stabilisierung gegen Abbau durch Sauerstoff, Feuchtigkeit, Hitze und innere Vernetzungsprozesse zu erreichen.

Es wäre von großer praktischer Bedeutung, wenn es gelänge, leitfähige Polymere in einer thermoplastischen Matrix so zu dispergieren, daß auf der einen Seite eine homogene Verteilung des leitfähigen Polymeren, auf der anderen Seie eine Mikromorphologie der eingearbeiteten leitfähigen Polymeren gewährleistet ist, die zu den gewünschten elektrischen Eigenschaften des gesamten Polymerblends führt.

Der Erfindung liegt demgemäß die Aufgabe zugrunde, einen Weg zu finden, elektrisch leitfähige Polymere wie PAc, PPP, PPy oder PPhc zu verformbaren Polymerblends zu verarbeiten, aus denen sich Formkörper mit guten mechanischen Eigenschaften und mit erhöhter elektrischer Leitfähigkeit herstellen lassen, und dabei gleichzeitig eine Stabilisierung gegen die verschiedenen bekannten Abbaumechanismen, insbesondere durch oxidativen Einfluß oder durch Vernetzung, zu erreichen.

### Die Erfindung

Gegenstand der Erfindung ist ein Verfahren zur Herstellung von verformbaren Polymerblends aus unlöslichen und unschmelzbaren elektrisch leitfähigen polykonjugierten organischen Polymeren sowie einem Matrix-Polymer, dadurch gekennzeichnet, daß man das im wesentlichen monomerfreie elektrisch leitfähige Polymer in einer Schmelze oder Lösung eines thermoplastischen Polymeren oder Polymergemisches mit einem Löslichkeitsparameter > 8,6 $[cal/cm^3]^{\frac{1}{2}}$ und mit einer Oberflächenspannung > 35 dyn/cm dispergiert, bis sich eine homogene, farblich von den eingesetzten leitfähigen organischen Polymeren und Matrixpolymeren unterschiedliche Masse gebildet hat, und dann - falls vorhanden - das Lösungsmittel entfernt.

Die Masse ist dann als homogen zu bezeichnen, wenn sie lichtmikroskopisch bis zu einer ca. 200-fachen Vergrößerung homogen erscheint. Ein Blend ist als homogen anzusehen, wenn - abgesehen von einigen seltenen als Fehler anzusehenden gröberen Partikeln - eine durchschnittliche Teilchengröße unter 20 $\mu m$, vorzugsweise unter 5 $\mu m$, in optimalen Fällen um und unter 1 $\mu m$ aufweisen, z.B. 50 bis 200nm (elektronenmikroskopisch erkennbar) vorliegt.

Geeignete Matrix-Polymere sind thermoplastische Polymere mit großem Löslichkeitsparameter und einer Oberflächenspannung von > 35 dyn/cm wie Polyether, Polyester, Polyvinylidenchlorid oder -fluorid, Polyamid, Polycaprolacton, Polyurethan, mit Essig-, Propion- oder Buttersäure teilveresterte Cellulose, teilveresterter Polyvinylalkohol bzw. teilverseiftes Polyvinylacetat, Polyvinylpyrrolidon, Polyvinylbutyral, wasserlösliche bzw. -quellbare Polymere wie z.B. Polyacrylsäure, flüssigkristalline Polymere wie z.B. thermoplastische flüssigkristalline Polyester, Ionomere oder polare funktionelle Gruppen aufweisende Polymere, Polyacrylnitril, deren Copolymere oder Gemische der vorstehenden Polymeren. Es ist auch möglich, reaktive Monomer- und/oder Prepolymergemische einzusetzen, die nach Herstellung der Dispersion zum Matrix-Polymer auspolymerisiert werden können. Beispiele sind Caprolactam-, Diol/Dicarbonsäure- und Diisocyanat/-Diol-/Polyester- oder Polyethergemische bzw. andere geeignete Reaktions(spritz)-gußmassen.

Zur Erzielung einer optimalen Dispersion ist es wesentlich, daß die bei der Polymerisation der leitfähigen Polymeren entstehenden Sekundär- und Tertiärstrukturen (Agglomerate) möglichst weitgehend, d.h. möglichst bis zu den Primärteilchen abgebaut werden. Zur Herstellung von elektrisch leitfähigen Polymerblends ist es wesentlich, daß sich die leitfähigen Partikel berühren und daß dazu die Konzentration des leitfähigen Polymeren oberhalb der für die elektrische Leitfähigkeit kritischen Volumenkonzentration, des sogenannten Perkolationspunktes liegt. Eine Beschreibung der physikalischen Gesetzmäßigkeiten der Perkolation am Beispiel von elektrisch leitfähigem Ruß findet sich bei K. Miyasaka, J. Mat. Sci. 17, 1610 bis 1616 (1982).

Vorzugsweise liegt die Konzentration in der Nähe des grenzflächen-energetischen Gleichgewichts, wo die Summe der Kohäsionsenergie gleich der Summe der Adhäsionsenergie ist und dadurch Kettenbildung eintritt. In der Praxis bedeutet dies, daß die Menge an leitfähigen Polymeren in dem Polymerblend abhängig von den gewählten Stoffpaaren zwischen 3 und 35 Gew.% liegen kann; vorzugsweise beträgt die Konzentration mindestens 8 Gew.%. Zur Erzeugung antistatischer Mischungen kann die Konzentration gegebenenfalls noch niedriger liegen, d.h. etwa 0,5 bis 3 Gew.% betragen.

Die erfindungsgemäße Dispergierung des leitfähigen Polymeren in dem physikalisch-chemisch teilverträglichen Matrix-Polymer wird im wesentlichen durch die hohe Grenzflächenenergie zwischen den beteiligten Stoffen erreicht. Es werden deshalb als Matrix-Polymere solche mit besonders hoher Oberflächenspannung eingesetzt. Zur Erleichterung der Dispergierung wird das Matrix-Polymer unter Erwärmen und Scheren entweder zum Schmelzen gebracht oder in einem geeigneten Lösungsmittel gelöst, welches anschließend entfernt wird.

Polymere mit niedrigem Löslichkeitsparameter wie Polyolefine oder Olefincopolymere mit einem Löslichkeitsparameter < 8,6 $[cal/cm^3]^{1/2}$ sind erfindungsgemäß nicht geeignet. Anstelle einer Dispersion in dem Matrix-Polymeren tritt Agglomeration ein, wobei sich polykristalline Mikrokristallnadeln bzw. -fibrillen von ca. 5 bis 50 $\mu m$ ausbilden, die durch Kontakte untereinander allerdings ebenfalls zu einer Leitfähigkeit des Polymerblends führen können.

Oberhalb des Perkolationspunktes bilden sich kettenförmige Aneinanderreihungen der kugelförmigen Primärteilchen in der kontinuierlichen Polymermatrix. Dabei besteht eine Art grenzflächen-energetisches Gleichgewicht durch Ausbildung von ebensovielen Kontaktpunkten zwischen den leitfähigen Polymerteilchen wie zwischen diesen und dem Matrix- Polymer. Die leitfähigen Teilchen bilden dadurch submikroskopische weitverzweigte Leiterbahnen bzw. ein durchgängiges Leiternetz.

Die elektrische Leitfähigkeit der organischen Polymeren läßt sich durch Dotieren (Komplexieren) vor oder nach der Herstellung des Polymerblends wesentlich erhöhen. Geeignete Komplexierungsmittel sind an sich bekannt; besonders bevorzugt sind zur p-Dotierung Jod, Antimon- oder Arsenpentafluorid, Tetrafluorborsäure $HBF_4$, Perchlorate, Schwefeltrioxid, Sulfonate oder Metallsalze, insbesondere Eisen(III)-chlorid, und zur n-Dotierung Butyl-Lithium, Diphenylhexyl-Lithium, Naphthalin-Natrium und andere.

Zur Erzielung besonderer Halbleitereigenschaften, die z.B. zur optischen Informationsspeicherung und -verarbeitung dienen können, kann man vorteilhafterweise homogen p-dotierte und homogen n-dotierte vordispergierte leitfähige Polymere so in ein Polymerblend einarbeiten, daß jedes p-dotierte Teilchen, isoliert durch das Matrix-Polymer, von n-dotierten Teilchen umgeben ist und umgekehrt. Durch Anwendung äußerer Energiequellen, z.B. Laserlicht, können die Teilchen in definierter Weise zu leitfähigen dreidimensionalen Strukturen angeregt werden.

Eine homogene Dotierung läßt sich erfindungsgemäß erreichen, indem man die Dotierung (Komplexierung) mit dem Dotierungsmittel (z.B. $J_2$ oder $FeCl_3$) in Lösung unter Einwirkung von Ultraschall ausführt. Dabei werden entweder die fertigpolymerisierten undotierten leitfähigen Polymeren, z.B. PAc oder PPhc, oder die Monomeren, z.B. Pyrrol, eingesetzt; bei Verwendung von Monomeren findet gleichzeitig die Polymerisation und Dotierung statt. Es hat sich gezeigt, daß die homogen dotierten Polymeren Produkte liefern, welche gegenüber einem Abbau (Leitfähigkeitserniedrigung) deutlich stabiler sind. Die Dotierung unter Ultraschalleinwirkung kann in Gegenwart oder Abwesenheit des nicht leitenden Matrix-Polymeren durchgeführt werden.

Weiterhin hat es sich als möglich erwiesen, nach bekannten Methoden synthetisierte, heterogen dotierte leitfähige Polymere wie z.B. PPy-Pulver nachträglich zu homogenisieren und vorzudispergieren, indem man sie in einer neutralen, alkalischen oder sauren wässrigen oder organischen Suspension aufschlämmt und der Einwirkung von Ultraschall aussetzt. Zur Isolierung des Produktes wird abfiltriert, zentrifugiert und/oder gefriergetrocknet.

Die Dotierung von beispielsweise Polyacetylen unter Einwirkung von Ultraschall in einer Lösung bzw. Dispersion führt zu völlig anderen Eigenschaften (vor allem gleichmäßigere Dotierung, höhere Leitfähigkeit, höhere Kristallinität bzw. größere Ausdehnung der Kristallite, erhöhte Stabilität, verbesserte Verarbeitbarkeit) der leitfähigen Polymeren im Vergleich zur Dotierung von beispielsweise Folien durch gasförmige Komplexierungsmittel ($J_2$, $AsF_5$ usw.) oder suspendierten, makroskopisch großen Teilchen (z.B. "Kletten", vgl. EP-A-62 211) durch gelöste Komplexierungsmittel (z.B. $FeCl_3$). Wenn man diese letzteren Verfahren als "heterogene" Dotierungsverfahren bezeichnet, kann man bei dem jetzt gefundenen Verfahren von einem "homogenen" Dotierungsverfahren sprechen. Homogen dotiertes PAc bildet in Polymerblends z.B. mit Cellulosepropionat mikroskopisch feine, unter 20 μm liegende homogene, möglicherweise flüssigkristalline Teilchen bzw. Fasern, die im Mikroskop unter Polarisationsfilterdunkelstellung hell erscheinen und hochleitfähig sind.

Gegebenenfalls kann man dem Polymerblend zur Erhöhung der Verarbeitungsstabilität übliche Antioxydantien (z.B. phenolische Antioxydantien) und/oder Vernetzungsinhibitoren (z.B. Phosphonite) in einer Menge von vorzugsweise 0,01 bis 0,5 Gew.% sowie andere Verarbeitungshilfsstoffe in einer Menge von 1 bis 5 Gew.% zusetzen. Zur Herstellung fotoleitender Polymerblends werden gegebenenfalls lichtsammelnde, fluoreszierende Farbstoffe zugesetzt. Zum Schutz der oxidationsempfindlichen leitfähigen Polymeren ist es günstig, bei der Herstellung des Polymerblends unter einem Schutzgas oder unter Vakuum zu arbeiten. Die erfindungsgemäß hergestellten Polymerblends weisen den besonderen Vorteil auf, daß das leitfähige Polymer durch die Dispergierung in dem Matrix-Polymer besonders gut gegen oxidativen Abbau und/oder eine Vernetzung sowohl während der Dispergierung als auch bei nachfolgenden Formungsverfahren geschützt ist. Dies kann insbesondere durch die Wahl von Matrixpolymeren mit besonders niedrigem $O_2$- und $H_2O$-Permeabilitätskoeffizienten optimiert werden.

Die erfindungsgemäßen Polymerblends und die daraus hergestellten Formteile zeigen eine andere Farbe als die pulverförmigen Ausgangsstoffe bzw. deren einfache mechanische Gemische; die Farbe ist für die jeweiligen leitfähigen Polymeren charakteristisch und läßt sich an superdünnen Schichten messen. Im Falle des Polymerblends aus Polyacetylen und Polycaprolacton ändert sich die Farbe des Polyacetylens beispielsweise von schwarz zu tiefblau, ein Anzeichen dafür, daß eine echte Dispergierung des leitfähigen Polymeren in der Polymermatrix stattfindet. Im Falle von Poly-μ-cyano(phthalocyaninato)-kobalt(III) tritt Polychromismus auf. Polypyrrol-Blends sind violett. Zur vollständigen Dispergierung unter Desagglomerierung der Sekundärteilchen des leitfähigen organischen Polymeren in der thermoplastischen Matrix verwendet man entweder ein besonders geeignetes, mit dem leitfähigen Polymer optimal verträgliches Matrix-Polymer oder man läßt Ultraschall auf die Schmelze oder Lösung des Matrix-Polymeren einwirken. Alternativ ist es auch möglich, unter Ultraschalleinwirkung zunächst das leitfähige Polymer in dem Lösungsmittel zu dispergieren und erst dann das Matrix-Polymer zuzusetzen. Ultraschall hat den Vorteil, daß die Mischung örtlich hohen schnell wechselnden Drucken unterworfen wird, ohne daß dabei eine makroskopische Scherbeanspruchung auftritt, welche ein beträchtliches mechano-chemisches Abbaurisiko mit sich bringt. Ultraschall wird zur Dispergierung bevorzugterweise dann eingesetzt, wenn die Verträglichkeit des Trägerpolymeren mit dem zu dispergierenden leitfähigen Polymeren bzw. die Grenzflächenenergie nicht ausreicht, um so allein die Primärpartikel zu benetzen und dadurch die Sekundär- und Tertiärstrukturen abzubauen.

Es wurde gefunden, daß einige wenige Paare aus Matrix-Polymer und leitfähigem Polymer existieren, die ohne zusätzliche Dispersionsenergie zu einer befriedigenden Dispersion führen.

Dies sind z.B.

- nicht dotiertes Polyacetylen und Polycaprolacton oder Cellulosepropionat,
- Poly-μ-cyano(phthalocyaninato)-kobalt(III) und Cellulosepropionat.

Andere Paare, so z.B.

- Polypyrrol und Cellulosepropionat oder Polyvinylpyrrolidon,
- dotiertes Polyacetylen und Cellulosepropionat,
- Poly-μ-cyano(phthalocyaninato)-kobalt(III) und Polyvinylpyrrolidon

erfordern Ultraschall als zusätzliche Dispergierenergie-Quelle.

Gegenstand der Erfindung ist ferner die Verwendung der mit Hilfe des erfindungsgemäßen Verfahrens erhaltenen Polymerblends zur Herstellung von Formteilen, insbesondere für elektrische Leiter, Halbleiter oder Fotoleiter. Unter Verwendung der Polymerblends lassen sich beispielsweise elektrische Bauelemente wie Halbleiterrelais, Thyristoren oder dergleichen sowie Batterien herstellen. Auch fotovoltaische Anwendungen, z.B. in der Solartechnik zur direkten Erzeugung von elektrischem Strom aus Licht, sind möglich. Andere Anwendungen sind permanent antistatische Verpackungen oder Bauelemente zur Informationsspeicherung und -verarbeitung.

Es ist zur Zeit noch nicht möglich, eine Erklärung für die Erfindung und ihre überraschenden Wirkungen anzugeben. Folgende Hypothesen könnten eine mögliche Erklärung sein, ohne daß die Erfindung an diese Hypothesen gebunden sein soll:

- Alle leitfähigen Polymeren bilden unter den üblichen Bedingungen der heterogenen Polymerisation kugelähnliche Primärteilchen, die ungerichtet aggregieren;
- diese Teilchen lassen sich nur unter den speziellen erfindungsgemäßen Bedingungen reversibel trennen und bei Überschreitung des Perkolationspunktes zu leitfähigen kettenförmigen Strukturen reagglomerieren;
- die Leitfähigkeitsmechanismen sind in reinen, ungeformten, aus nur aggregierten Primärteilchen bestehenden rohen leitfähigen Polymeren die gleichen wie im homogenen Polymerblend oberhalb des Perkolationspunktes;
- neben den bekannten Ursachen für die Instabilität kommt als weitere, möglicherweise entscheidende die hinzu, daß die bekannten Methoden der heterogenen Dotierung zu heterogenen Agglomeraten führen, die (z.B. durch Diffusionsprozesse) homogen zu werden trachten und dabei die inneren Strukturen zerstören;

- ein optimaler Fall für ein leitfähiges Polymerblend ist demnach ein homogen dotiertes leitfähiges Polymer, welches homogen feinstteilig im Matrix-Polymer dispergiert ist, wobei letzteres auch eine Schutzfunktion gegen einen möglichen Sauerstoffangriff ausübt.

Zur näheren Erläuterung der Erfindung sollen die nachfolgenden Beispiele dienen, auf welche die Erfindung jedoch nicht beschränkt ist.

Beispiel 1

Es wurden 0,185 g schwarzes trans-Polyacetylen mit 2 mg eines phenolischen Antioxidationsmittels und 2 mg Phosphonit in einer Lösung von 1,67 g Polycaprolacton in 10 ml Dimethylformamid unter Ultraschalleinwirkung dispergiert. Danach wurde das Lösungsmittel entfernt. Es entstand eine elastische thermoplastisch verarbeitbare Folie, die im Durchlicht kräftig blau ist.

Beispiel 2

In einem Rundkolben wurden 9 g Polycaprolacton geschmolzen und 1 g Polyacetylen (synthetisiert nach der Luttinger-Methode, vgl. B. Weßling, Makrom. Chem. 185, 1265 - 1275 (1984)) unter strömendem Stickstoff zugesetzt. Zur Dispergierung tauchte eine Ultraschallsonotrode direkt in die Schmelze ein. Nach einer halben Stunde Beschallung wurde die Mischung abgekühlt. Die erhaltene feste Masse ließ sich thermoplastisch verarbeiten. Eine davon dünn gepreßte Folie zeigte unter dem Mikroskop eine ähnliche Verteilung wie im Beispiel 1. Auch diese elastische Folie erscheint im Durchlicht tiefblau. Eine Verbesserung der Verteilung (= Verminderung der Zahl größerer unverteilter Partikel) erhält man, wenn man das Verfahren in analoger Weise in einem Dispersionskneter ausführt, dessen Stempel als Sonotrode ausgebildet ist (vgl. Figur 3).

Beispiel 3

Eine gemäß Beispiel 1 erhaltene Folie, die in 1,66 g Polycaprolacton 0,185 g (10%) Polyacetylen enthielt, wurde bei Raumtemperatur einen Tag lang einer mit Joddampf gesättigten Stickstoffatmosphäre ausgesetzt. Die anfängliche Leitfähigkeit von 6 x $10^{-8}$ Siemens/cm stieg dabei auf 2 x $10^{-4}$ Siemens/cman.

Beispiel 4

In einen Dispersionskneter wurden 50 g Cellulosepropionat gegeben und plastifiziert. Anschließend wurden 0,5 g Poly-μ-cyano-(phthalocyaninato)-kobalt(III)-Pulver zugesetzt. Es ergab sich - auch ohne Ultraschalleinwirkung - eine sehr homogene Verteilung, die auch bei hohen Vergrößerungen im Lichtmikroskop nicht auflösbar war.

## Beispiel 5

Es wurden bei 22° 50 g Alkylsulfonat und 33,5 g Pyrrol in 1500 ml Wasser unter Rühren gelöst. Die Lösung wurde auf pH 4 gepuffert. Zu diesem Gemisch wurden innerhalb von 1,5 Stunden 150 g $FeCl_3$ x 6 $H_2O$ gelöst in 300 ml Wasser zugetropft. Das Produkt wurde über eine Nutsche abfiltriert und dreimal mit Wasser gewaschen und anschließend getrocknet. Zur Erzielung sehr feiner Partikel wurde die Synthese in einem Parallelversuch unter Ultraschalleinwirkung durchgeführt. In diesem Fall wurde das Produkt durch Zentrifugieren abgetrennt. Die elektrische Leitfähigkeit lag bei 1 bis 10 Siemens/cm.

Zur Nachbehandlung wurde das erhaltene Produkt (ca. 50 g) in einer 1n NaOH (1000 ml) unter Ultraschall dispergiert und ca. 1 Stunde lang beschallt. Danach wurde das Produkt abfiltriert und dreimal mit Wasser nachgewaschen. Das PPy verlor dabei ca. 50% an Gewicht. Nach dem Trocknen zeigte das PPy eine Leitfähigkeit von $10^{-3}$ Siemens/cm. Das basisch behandelte PPy wurde erneut mit Ultraschall dispergiert, jedoch in 1 Liter eines Gemisches aus 1 Teil 35%iger Salzsäure und 3 Teilen Methanol. Nach dem Filtrieren und dreimaligem Waschen mit Methanol wurde das Produkt getrocknet. Es wies nun eine Leitfähigkeit von 10 Siemens/cm auf.

## Beispiel 6

15 g Polyacetylenpulver wurden in 800 ml Toluol suspendiert und in einen Kolben überführt. Anschließend wurden 200 ml einer Lösung von 20 g Jod in Toluol zugesetzt. Der Kolben wurde unter Stickstoff verschlossen und mit einem Rückflußkühler versehen, der mit einem Luftballon verschlossen war. Der Kolben wurde so in ein Ultraschallbad gestellt, daß bei der Beschallung heftige Turbulenzen zu erkennen waren; dabei erwärmte sich das Reaktionsmedium auf 50 bis 60°C. Nach 10 Stunden wurde abgeschaltet und einen Tag zum Absetzen stehengelassen. Bei der Aufarbeitung wurde unter Stickstoff filtriert und mehrfach mit Toluol nachgewaschen, bis kein Jod mehr nachweisbar war, und getrocknet. Es wurde ein leitfähiges PAc mit einer Leitfähigkeit bis zu 50 Siemens/cm erhalten.

Mit anderen Lösungsmitteln wurden folgende Ergebnisse erhalten:
Toluol, nach Waschen mit DMF: 1 Siemens/cm
DMF: 0,5 Siemens/cm

Butylacetat: 4 Siemens/cm
Komplexierung mit $FeCl_3$ in $CH_3CN$: 6 Siemens/cm.

Das homogen dotierte PAc wurde im Dispersionskneter unter Ultraschall in PCL (Oberflächenwiderstand $10^{12}$ Ω) eingearbeitet. Bei Verwendung von 49,5 g PCL und 0,5g PAc erzielte man folgende Werte (bei 60° Masse-Temperatur):
15 Min. Dispersionszeit:
bläulich halbtransparent gefärbte Folie, leicht stippig, $10^{10}$ Ω
60 Min. Dispersionszeit:
intensiv blaue halbtransparente Folie, nahezu stippenfrei, $10^9$ Ω

## Vergleichsversuch 1

Gemäß Beispiel 1 wurden unter Ultraschall 56 mg Poly-μ-cyano-(phthalocyaninato)-kobalt(III) in 04 mg Polycaprolacton mit Hilfe von 5 ml Dimethylformamid dispergiert. Nach Entfernen des Lösungsmittels erhielt man eine Folie, die im Auflicht dunkelblau, im Durchlicht türkis und bei seitlich einfallendem Licht violett erschien. Die Leitfähigkeit betrug nur 5 x $10^{-11}$ Siemens/cm. Auch eine Erhöhung der Konzentration auf 20% ergab nur eine geringe Verbesserung auf 3 x $10^{-10}$ Siemens/cm. Dies lag an der unvollkommenen Dispergierung der Teilchen, wie man unter dem Lichtmikroskop an einer dünn gepreßten Folie erkennen kann. Die Dispersion befindet sich offenbar nicht im grenzflächen-energetischen Gleichgewicht.

## Vergleichsversuch 2

Gemäß Beispiel 4 wurde Polyacetylen in eine Polyethylenschmelze eingearbeitet. Die dadurch erhaltene Masse enthielt nach dem Extrudieren visuell erkennbare schwarze Teilchen ("Stippen"). Eine aus dem Polymerblend hergestellte Folie zeigte keine blaue Färbung. Polyethylen ist somit normalerweise ein ungeeignetes Matrixpolymer für die Zwecke des erfindungsgemäßen Verfahrens.

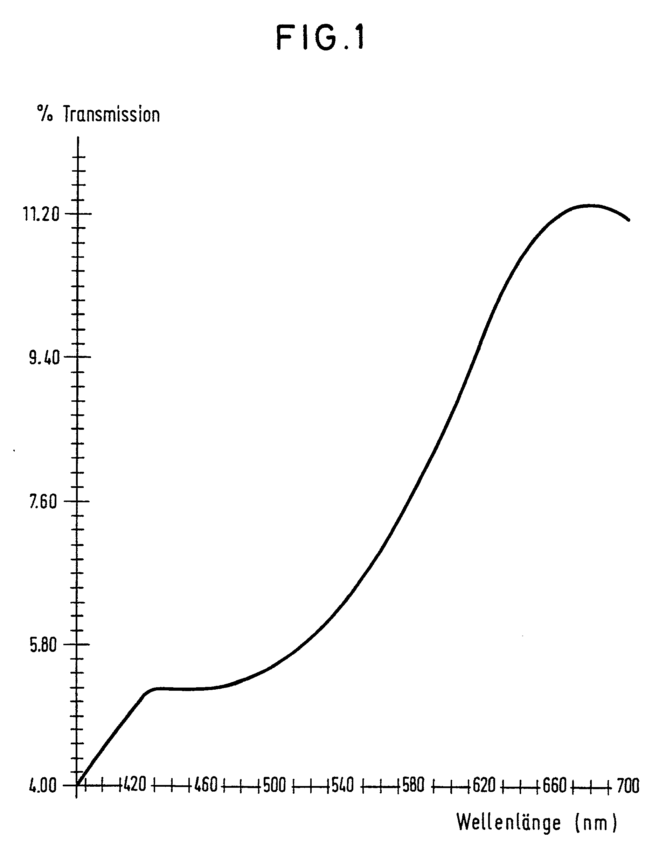

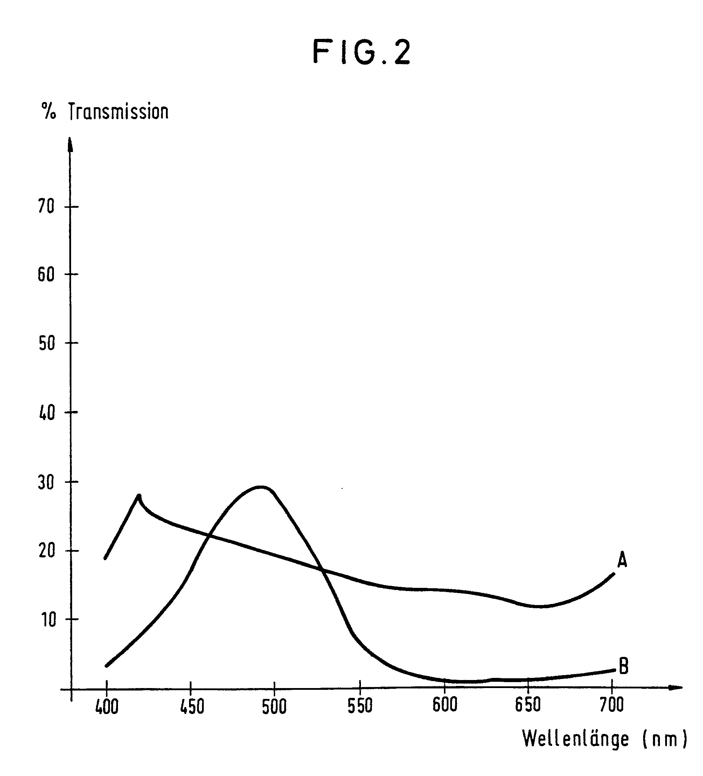

Die Figuren 1 und 2 zeigen die Transmissionsspektren von erfindungsgemäß hergestellten Polymerblends, und zwar

Figur 1  für Polypyrrol in Cellulosepropionat
Figur 2  Kurve A 0,5 % Polyacetylen in Cellulosepropionat
Kurve B 0,44 % Poly-μ-cyano-(phthalocyaninato)-kobalt(III) in Cellulosepropionat.

## Patentansprüche

1. Verfahren zur Herstellung von verformbaren Polymerblends aus unlöslichen und unschmelzbaren elektrisch leitfähigen polykonjugierten organischen Polymeren sowie einem Matrix-Polymer, dadurch gekennzeichnet, daß man das im wesentlichen monomerfreie elektrisch leitfähige Polymer in einer Schmelze oder Lösung eines thermoplastischen Polymeren oder Polymergemisches mit einem Löslichkeitsparameter > 8,6 $[cal/cm^3]^{1/2}$ und mit einer Oberflächenspannung > 35 dyn/cm dispergiert, bis sich eine homogene, farblich von den eingesetzten leitfähigen organischen Polymeren und Matrixpolymeren unterschiedliche Masse gebildet hat, und dann - falls vorhanden - das Lösungsmittel entfernt.

2. Verfahren nach Anspruch 1, dadurch gekennzeichnet, daß zur Herstellung elektrisch leitfähiger Blends die Konzentration des leitfähigen Polymeren in dem Polymerblend bei oder oberhalb der für die elektrische Leitfähigkeit kritischen Volumenkonzentration (oberhalb des Perkolationspunktes) liegt.

3. Verfahren nach Anspruch 1 oder 2, dadurch gekennzeichnet, daß man als Matrix-Polymer wasserlösliche bzw. -quellbare Polymere, flüssigkristalline Polymere, Ionomere oder Polymere mit polaren funktionellen Gruppen verwendet.

4. Verfahren gemäß Anspruch 3, dadurch gekennzeichnet, daß man als Matrix-Polymer Polyether, Polyester, Polyvinylidenchlorid oder -fluorid, Polyamide, Polycaprolacton, Polyurethane, mit Essig-, Propion- oder Buttersäure teilveresterte Cellulose, teilveresterten Polyvinylakohol oder teilverseiftes Polyvinylacetat, Polyvinylpyrrolidon, Polyvinylbutyral, Polyacrylate, Polyacrylnitril, deren Copolymere oder Gemische der vorstehenden Polymeren verwendet.

5. Verfahren nach Anspruch 1, dadurch gekennzeichnet, daß man die Schmelze oder Lösung des Matrixpolymeren in situ aus reaktiven Monomeren und/oder Prepolymeren erzeugt.

6. Verfahren nach Anspruch 5, dadurch gekennzeichnet, daß man das leitfähige Polymer in reaktiven Monomeren und/oder Prepolymeren dispergiert, die nach Herstellung der Dispersion zum Matrix-Polymer auspolymerisieren.

7. Verfahren nach Anspruch 5 oder 6, dadurch gekennzeichnet, daß man als reaktive Monomere oder Prepolymere Methylmethacrylat, Caprolactam-, Diol-/Dicarbonsäure-, Diisocyanat-/Diol-/Polyester- oder Polyethergemische oder ähnliche Reaktions(spritz)-

gußmassen verwendet.

8. Verfahren nach einem der Ansprüche 1 bis 7, dadurch gekennzeichnet, daß man zur vollständigen Dispergierung und Desagglomerierung des leitfähigen organischen Polymeren in dem Matrix-Polymer Ultraschall auf die Schmelze oder Lösung einwirken läßt.

9. Verfahren gemäß Anspruch 8, dadurch gekennzeichnet, daß man zunächst das elektrisch leitfähige organische Polymer unter Ultraschalleinwirkung in einem Lösungsmittel dispergiert und anschließend das Matrix-Polymer zufügt.

10. Verfahren nach einem der Ansprüche 1 bis 9, dadurch gekennzeichnet, daß man die Leitfähigkeit des elektrisch leitfähigen Polymeren durch Dotieren (Komplexieren) vor oder nach Herstellung des Polymerblends erhöht.

11. Verfahren nach Anspruch 10, dadurch gekennzeichnet, daß man zur p-Dotierung (Komplexierung) Jod, Antimon- oder Arsenpentafluorid, Tetrafluorborsäure, Perchlorate, Schwefeltrioxid, Sulfonate oder Metallsalze, insbesondere Eisen(III)-chlorid, und zur n-Dotierung Butyl-Lithium, Diphenylhexyl-Lithium oder Naphthalin-Natrium verwendet.

12. Verfahren nach den Ansprüchen 8 oder 9, dadurch gekennzeichnet, daß man die Dotierung (Komplexierung) mit dem Dotierungsmittel in Lösung unter Einwirkung von Ultraschall ausführt, wobei entweder die fertigpolymerisierten undotierten leitfähigen Polymeren oder die Monomeren eingesetzt werden und im letzteren Fall gleichzeitig die Polymerisation durchgeführt wird.

13. Verfahren nach Anspruch 10, dadurch gekennzeichnet, daß die Dotierung in Gegenwart oder Abwesenheit des nicht leitenden Matrixpolymeren ausgeführt wird.

14. Verfahren nach einem der Ansprüche 8 oder 9, dadurch gekennzeichnet, daß man heterogen dotierte leitfähige Polymere in einem neutralen, alkalischen oder sauren wässrigen oder organischen Medium suspendiert und durch Einwirkung von Ultraschall homogenisiert.

15. Verfahren nach einem der Ansprüche 8 bis 12, dadurch gekennzeichnet, daß man n- und p-dotierte leitfähige Polymere vordispergiert und anschließend zusammen mit dem Matrix-Polymer zu dem Polymerblend verarbeitet.

16. Verfahren nach einem der Ansprüche 1 bis 8, dadurch gekennzeichnet, daß man Antioxidantien und/oder Vernetzungsinhibitoren in einer Menge von 0,01 bis 0,5 Gew.%, andere Verarbeitungshilfsmittel in einer Menge von 1 bis 5 Gew.% sowie gegebenenfalls lichtsammelnde, fluoreszierende Farbstoffe zusetzt.

17. Verfahren nach einem der Ansprüche 1 bis 14, dadurch gekennzeichnet, daß man bei der Herstellung des Polymerblends unter einer Schutzgasatmosphäre oder unter Vakuum arbeitet.

18. Verwendung der mittels des Verfahrens der Ansprüche 1 bis 17, hergestellten verformbaren Polymerblends zur Herstellung von Formteilen und elektrischen Bauelementen.

## Claims

1. Process for preparing deformable polymer blends comprising insoluble and infusible electrically conductive polyconjugated organic polymers as well as a matrix polymer, characterized in that essentially monomer-free electrically conductive polymers are dispersed in a melt or solution of a thermoplastic polymer or polymer mixture with a solubility parameter > 8.6 $[cal/cm^3]^{1/2}$ and with a surface tension > 35 dyn/cm until a homogeneous compound which is different in colour from the conductive organic polymers and matrix polymers used is formed and then - if present the solvent is removed.

2. Process according to claim 1, characterized in that for the preparation of electrically conductive blends, the concentration of the conductive polymer in the polymer blend is at or above the volume concentration which is critical for the electrical conductivity (above the percolation point).

3. Process according to claim 1 or 2, characterized in that water-soluble or water-swellable polymers, liquid crystalline polymers, ionomers or polymers with polar functional groups are used as matrix polymer.

4. Process according to claim 3, characterized in that polyether, polyester, polyvinylidene chloride or fluoride, polyamides, polycaprolactone, polyurethanes, cellulose partially esterified with acetic, propionic or butyric acid, partially esterified polyvinyl alcohol or partially saponified polyvinyl acetate, polyvinyl pyrrolidone, polyvinylbutyral, polyacrylates, polyacrylonitrile, copolymers thereof or mixtures of the aforementioned polymers are used as matrix polymer.

5. Process according to claim 1, characterized in that the melt or solution of the matrix polymer is produced in situ from reactive monomers and/or prepolymers.

6. Process according to claim 5, characterized in that the conductive polymer is dispersed in reactive monomers which, after the dispersion has been prepared, polymerize out to the matrix polymer.

7. Process according to claim 5 or 6, characterized in that methyl methacrylate, caprolactam, diol/dicarboxylic acid, diisocyanate/diol/polyesteror polyether mixtures or similar reaction (injection) moulding compounds are used as reactive monomers or prepolymers.

8. Process according to one of claims 1 to 7, characterized in that, in order to achieve complete dispersion and de-agglomeration of the conductive organic polymers in the matrix polymer, ultra-sound is allowed to act on the melt or solution.

9. Process according to claim 8, characterized in that the electrically conductive organic polymer is firstly dispersed in a solvent under the effect of ultra-sound, and the matrix polymer is subsequently added.

10. Process according to one of claims 1 to 9, characterized in that the conductivity of the electrically conductive polymers is increased by doping (complexing) before or after the preparation of the polymer blend.

11. Process according to claim 10, characterized in that iodine, antimony or arsenic(V) fluoride, tetrafluoroboric acid, perchlorates, sulphur trioxide, sulphonates or metal salts, particularly iron(III)chloride are used for p-doping (complexing), and butyl lithium, diphenylhexyl lithium or naphthalene sodium are used for n-doping.

12. Process according to claims 8 or 9, characterized in that the doping (complexing) is carried out with the doping agent in solution under the effect of ultra-sound, either the ready-polymerized undoped conductive polymers or the monomers being used and in the latter case, polymerization being carried out simultaneously.

13. Process according to claim 10, characterized in that the doping is carried out in the presence or absence of the non-conductive matrix polymer.

14. Process according to one of claims 8 or 9, characterized in that heterogeneously doped conductive polymers are suspended in a neutral, alkaline or acid aqueous or organic medium and homogenized by the effect of ultrasound.

15. Process according to one of claims 8 to 12, characterized in athat n- and p-doped conductive polymers are pre-dispersed and subsequently processed together with the matrix polymer to form the polymer blend.

16. Process according to one of the claims 1 to 8, characterized in that antioxidants and/or crosslinking inhibitors are added in a quantity of 0.01 to 0.5 wt-%, other processing aids in a quantity of 1 to 5 wt-% as well as, if need be, light-collecting, fluorescent colorants.

17. Process according to one of the claims 1 to 14, characterized in that, when preparing the polymer blend, operations are carried out under protective gas atmosphere or under vacuum.

18. Use of the deformable polymer blends prepared by means of the process of the claims 1 to 17 for the preparation of moulds and electrical components.

**Revendications**

1. Procédé pour fabriquer des mélanges polymères moulables formés par des polymères organiques polyconjugués, électriquement conducteurs, insolubles et non fusibles, ainsi que par un polymère formant matrice, caractérisé en ce qu'on disperse le polymère électriquement conducteur, sensiblement exempt de monomères, dans une masse fondue ou une solution d'un polymère ou d'un mélange polymère thermoplastique possédant un paramètre de solubilité > 8,6 $[cal/cm^3]^{1/2}$ et une tension superficielle supérieure à 35 dynes/cm, jusqu'à ce qu'il se forme une masse homogène, qui diffère du point de vue couleur des polymères organiques conducteurs et des polymères formant matrices organiques conducteurs, utilisés, et qu'on élimine ensuite le solvant -dans le cas où il est présent.

2. Procédé selon la revendication 1, caractérisé en ce que pour la formation de mélanges électriquement conducteurs, la concentration du polymère conducteur dans le mélange polymère est égale ou supérieure à la concentration volumique critique pour la conductivité électrique (au-dessus du point de percolation).

3. Procédé selon la revendication 1 ou 2, caractérisé en ce qu'on utilise comme polymère formant matrice, des polymères solubles à l'eau ou aptes à gonfler dans l'eau, des polymères à cristal liquide, des ionomères ou des polymères possédant des groupes fonctionnels polaires.

4. Procédé selon la revendication 3, caractérisé en ce qu'on utilise, comme polymère formant matrice, un polyéther, un polyester, un polychlorure ou polyfluorure de polyvinylidène, des polyamides, de la polycaprolactone, du polyuréthane, de la cellulose partiellement estérifiée avec l'acide acétique, l'acide propionique ou l'acide butyrique, un alcool polyvinylique partiellement estérifié ou de l'acétate de polyvinyle partiellement saponifié, de la polyvinylpyrrolidone, du polyvininylbutyral, du polyacrylate, du polyacrylonitrile, leurs copolymères ou des mélanges des présents polymères.

5. Procédé selon la revendication 1, caractérisé en ce qu'on produit la masse fondue ou la solution du polymère formant matrice in situ à partir de monomères et/ou de prépolymères réactifs.

6. Procédé selon la revendication 5, caractérisé en ce qu'on disperse le polymère conducteur dans des monomères et/ou des prépolymères réactifs, qui polymérisent après formation de la dispersion pour former le polymère formant matrice.

7. Procédé selon la revendication 5 ou 6, caractérisé en ce qu'on utilise, comme monomères ou prépolymères réactifs, du méthylméthacrylate, des mélanges prolactame, diol/acide dicarbonique, diisocyanate/diol/polyester ou polyéther ou des masses de moulage (par injection) réactives.

8. Procédé selon l'une des revendications 1 à 7, caractérisé en ce que pour obtenir la dispersion complète et la désagglomération des polymères organiques conducteurs dans le polymère formant matrice, on fait agir des ultrasons sur la masse fondue ou la solution.

9. Procédé selon la revendication 8, caractérisé en ce qu'on disperse tout d'abord le polymère organique électriquement conducteur dans un solvant en faisant agir des ultrasons et qu'on ajoute ensuite le polymère formant matrice.

10. Procédé selon l'une des revendications 1 à 9, caractérisé par le fait qu'on accroît la conductivité du polymère électriquement conducteur par dopage (complexation) avant ou après la formation du mélange polymère.

11. Procédé selon la revendication 10, caractérisé en ce que pour réaliser le dopage de type p (complexation), on utilisé de l'iode, du fluorure d'antimoine ou d'arsenic, de l'acide tétrafluoroborique, des perchlorates, du trioxyde de soufre, des sulfonates ou des sels métalliques, notamment du chlorure ferrique, et que pour le dopage de type n, on utilise du butyl-lithium, du diphényl-hexyl-lithium ou de la naphtaline-sodium.

12. Procédé selon la revendication 8 ou 9, caractérisé en ce qu'on exécute le dopage (complexation) avec un agent dopant en solution, moyennant l'action d'ultrasons, auquel cas on utilise les polymères conducteurs non dopés et dont la polymérisation est terminée, ou les monomères et, dans ce dernier cas, on exécute simultanément la polymérisation.

13. Procédé selon la revendication 10, caractérisé en ce qu'on réalise le dopage en présence ou en l'absence du polymère non conducteur formant matrice.

14. Procédé selon l'une des revendications 8 ou 9, caractérisé en ce qu'on met en suspension un polymère conducteur dopé de façon hétérogène, dans un milieu neutre, alcalin ou acide, aqueux ou organique, et qu'on réalise l'homogénéisation en utilisant des ultrasons.

15. Procédé selon l'une des revendications 8 à 12, caractérisé en ce qu'on disperse préalablement les conducteurs dopés du type n et du type p et qu'on les traite ensuite conjointement avec la matrice formant polymère, pour former le mélange polymère.

16. Procédé selon l'une des revendications 1 à 8, caractérisé en ce qu'on ajoute des antioxydants et/ou des inhibiteurs de réticulation en une quantité comprise entre 0,01 et 0,5 % en poids, d'autres agents auxiliaires de traitement en une quantité comprise entre 1 et 5 % en poids ainsi que, éventuellement, des colorants collectant la lumière et fluorescents.

17. Procédé selon l'une des revendications 1 à 14, caractérisé en ce que, lors de la fabrication du mélange polymère, on travaille dans une atmosphère de gaz protecteur ou sous vide.

18. Utilisation des mélanges polymères moulables fabriqués à l'aide du procédé selon l'une des revendications 1 à 17, pour fabriquer des pièces moulées et des composants électriques.

# FIG.1

% Transmission

Wellenlänge (nm)

# FIG.2

% Transmission

Wellenlänge (nm)